# EUROPÄISCHE PATENTANMELDUNG

(11) **EP 1 930 476 A1**
(43) Veröffentlichungstag der Anmeldung: **11.06.2008**
(21) Anmeldenummer: 06025368.9
(22) Anmeldetag: 07.12.2006
(51) Int. Cl.: C23C 28/00, C23C 30/00, G01K 1/20

(54) **Schichtsystem**

(71) Anmelder: SIEMENS AKTIENGESELLSCHAFT, 80333 München (DE)
(72) Erfinder: Schumann, Eckart, Dr., 45468 Mühlheim an der Ruhr (DE); Subramanian, Ramesh, Dr., 10777 Berlin (DE); Wessler, Berit, Dr., 82024 Taufkirchen (DE)

(57) **Zusammenfassung**

Es wird ein Schichtsystem (1) zur Verfügung gestellt, welches ein Substrat (4) aufweist, auf dem eine erste Schicht (13) vorhanden ist, die ein thermographisches Material aufweist. Das thermographische Material ist eine mit wenigstens einem Seltenerdmaterial dotierte Pyrochlorphase.

## Beschreibung

Die Erfindung betrifft ein Schichtsystem, das wärmedämmende Eigenschaften aufweist.

Ein solches Schichtsystem weist ein Substrat bestehend aus einer Metalllegierung auf der Basis von Nickel, Kobalt oder Eisen auf. Derartige Erzeugnisse kommen vor allem als Bauteile von Gasturbinen, insbesondere als Gasturbinenschaufeln oder Hitzeschilde, zum Einsatz. Derartige Bauteile sind einem Heißgasstrom von aggressiven Verbrennungsgasen ausgesetzt. Daher müssen sie hohen thermischen Belastungen Stand halten können. Des Weiteren ist es erforderlich, dass diese Bauteile oxidations- und korrosionsbeständig sind. Vor allem an bewegliche Bauteile, z.B. Gasturbinenschaufeln, aber auch an statische Bauteile sind fernerhin mechanische Anforderungen zu stellen. Die Leistung und der Wirkungsgrad einer Gasturbine, in der heißgasbelastbare Bauteile Verwendung finden, steigen mit zunehmender Betriebstemperatur. Um einen hohen Wirkungsgrad und eine hohe Leistung zu erzielen, werden durch die hohen Temperaturen besonders belastete Komponenten der Gasturbinen mit einem keramischen Werkstoff beschichtet. Dieser wirkt als Wärmedämmschicht zwischen dem Heißgasstrom und dem metallischen Substrat. Dabei weisen moderne Bauteile zumeist mehrere Beschichtungen auf, die jeweils spezifische Aufgaben erfüllen. Es liegt somit ein Mehrschichtsystem vor.

Da Leistung und Wirkungsgrad von Gasturbinen mit zunehmender Betriebstemperatur steigen, wurde immer wieder versucht, durch Verbesserung des Beschichtungssystems höhere Temperaturen zu ermöglichen und so eine höhere Leistungsfähigkeit von Gasturbinen zu erzielen.

Die EP 0 992 603 A1 offenbart ein Wärmedämmschichtsystem aus Gadoliniumoxid und Zirkonoxid mit einer kubischen Kristallstruktur.

Die EP 1 321 542 A1 offenbart ein metallisches Substrat, das mit einer keramischen Schicht beschichtet ist, die Hafniumoxid umfasst.

In der EP 1 505 042 A2 wird eine Wärmedämmschicht auf Zirkonoxidbasis beschrieben, die ein trivalentes Oxid und mindestens ein pentavalentes Oxid umfasst.

Die US 6,015,630 beschreibt eine Wärmedämmschicht, die Yttriumoxid-Aluminiumgranat umfasst, wobei das Yttrium teilweise durch ein Seltenerdelement ersetzt sein kann.

Wärmedämmschichten aus mit Yttriumoxid stabilisiertem Zirkoniumoxid mit einem Seltenerdoxid sind weiterhin in EP 1 550 644 A1, US 6,730,918, EP 1 249 515 A2, EP 1 550 744 A1, EP 1 536 039 A1 und EP 0 825 271 A1 beschrieben.

Eine Möglichkeit zur Messung von Oberflächentemperaturen von Wärmedämmschichten besteht in der Verwendung thermographischer Leuchtstoffe. Eine Wärmedämmschicht mit eingebettetem thermographischem Indikatorwerkstoff und ein Verfahren zum Ermitteln der Temperatur der Wärmedämmschicht sind beispielsweise in EP 1 105 550 B1 beschrieben. Zum Ermitteln der Temperatur der Wärmedämmschicht wird der Indikatorwerkstoff mittels eines gepulsten Lasers zum Fluoreszieren angeregt. Nach dem Abschalten des Anregungsimpulses fällt die Intensität des Fluoreszenzspektrums mit einer charakteristischen Zeitkonstante t exponentiell ab. So zeigt beispielsweise mit Terbium (Tb) dotiertes Yttrium Aluminium Garnet (YAG:Tb) zwischen 700 und 1000 °C eine monotone Abnahme der charakteristischen Zeitkonstante t. Anhand einer Messung der Zeitkonstante kann die Temperatur des Indikatorwerkstoffes und damit der Wärmedämmschicht, in die er eingebettet ist, festgestellt werden, sofern eine geeignete Kalibrierung vorgenommen wurde. Unter Umständen können verschiedene Linien des Emissionsspektrums unterschiedliche Abklingkonstanten besitzen, die auch unterschiedliche Temperaturabhängigkeiten aufweisen können. Neben YAG:Tb sind in EP 1 105 550 auch mit Dysprosium (Dy) dotiertes Yttrium Aluminium Garnet (YAG:Dy) sowie mit Yttrium stabilisiertes Zirkonoxid (YSZ) mit einem oder mehreren Seltenerdelementen genannt.

Statt des zeitlichen Abklingverhaltens der Emissionsintensität des Indikatorwerkstoffes kann auch das Intensitätsverhältnis zweier Emissionswellenlängen zum Ermitteln der Temperatur des Indikatorwerkstoffes, und damit der Temperatur der Wärmedämmschicht, herangezogen werden. Das Intensitätsverhältnis hängt näherungsweise linear von der Temperatur des Indikatorwerkstoffes - d.h. von der Temperatur der Wärmedämmschicht, in die der Indikatorwerkstoff eingebettet ist - ab. Das Messen der Temperatur über das Intensitätsverhältnis ist ebenfalls in EP 1 105 550 B1 beschrieben.

Es ist eine Aufgabe der Erfindung, ein Material aufzuzeigen, das gute wärmedämmende Eigenschaften sowie eine gute Anbindung an ein Substrat und damit eine lange Lebensdauer des gesamten Schichtsystems aufweist und gleichzeitig eine Temperaturmessung zulässt.

Die Aufgabe wird gelöst durch ein Schichtsystem gemäß Anspruch 1 und die Verwendung eines Gemisches gemäß Anspruch 19.

In den Unteransprüchen sind weitere vorteilhafte Maßnahmen aufgeführt, die beliebig in vorteilhafter Art und Weise kombiniert werden können.

Die vorliegende Erfindung betrifft ein Schichtsystem, das ein Substrat aufweist, auf dem eine erste Schicht vorhanden ist, die ein thermographisches Material aufweist, wobei das thermographische Material eine mit wenigstens einem Seltenerdmaterial dotierte Pyrochlorphase ist.

Unter einem thermographischen Material soll ein photolumineszierendes Material, also ein durch bspw. UV-Strahlung zum Leuchten anzuregendes Material, zu verstehen sein, bei dem die Intensität und/oder die Abklingzeit der angeregten Lumineszenzstrahlung von der Temperatur des photolumineszierenden Materials abhängt bzw. abhängen. Insbesondere die Intensität kann dabei auch von weiteren Faktoren, bspw. der Konzentration des Seltenerdmaterials als Dotierstoff, abhängen.

Das thermographische Material, d.h. die Pyrochlorphase, ist also aus einem Wirtsmaterial und einem Seltenerddotierungsmittel aufgebaut. Das Seltenerddotierungsmittel ist dabei als Kation in das Wirtsmaterial eingebettet und dient als Aktivator des thermographischen Leuchtstoffes. Der thermographische Leuchtstoff umfasst somit das Wirtsgitter und das Seltenerd-Kation als Aktivator.

Die mit einem Seltenerdmaterial dotierte Pyrochlorphase der ersten Schicht vereint in vorteilhafter Weise wärmedämmende Eigenschaften mit thermographischen Eigenschaften. Das thermographische Material ermöglicht die Messung der Temperatur der Wärmedämmschicht durch Anregung von Lumineszenz mittels Strahlung, bspw. mittels UV-Strahlung. Anhand bspw. der Temperaturabhängigkeit im Abklingverhalten der Lumineszenzstrahlung kann dann aus einer Messung des Abklingverhaltens auf die Temperatur der ersten Schicht, d.h. der Pyrochlorphase, geschlossen werden.

Zudem ermöglicht das thermographische Material die Detektion von Verschleiß in der Wärmedämmschicht. Beim Verschleiß wird das thermographische Material abgetragen. Verschleiß, d.h. das Fehlen thermographischen Materials, kann dann aufgrund an der verschlissenen Stelle reduzierter oder gar ganz fehlender Lumineszenz detektiert werden.

Das Seltenerddotierungsmittel ist vorteilhaft ausgewählt aus der Gruppe, bestehend aus Eu (Europium), Tb (Terbium), Er (Erbium), Dy (Dysprosium), Sm (Samarium), Ho (Holium), Pr (Praseodym), Yb (Ytterbium), Nd (Neodym) und Tm (Thulium). Das Seltenerddotierungsmittel kann als Oxid, also etwa als Eu-, Tb-, Er-, Dy-, Sm-, Ho-, Pr-, Yb-, Nd- oder Tm-Oxid, mit dem Wirtsgittermaterial zur Reaktion gebracht werden, um es als Seltenerd-Kation in das Wirtsmaterial einzubetten. Aufgrund des vorteilhaften temperaturabhängigen Abklingverhaltens ihrer Lumineszenzstrahlung sind Dy und Tm als Dotierungsmittel besonders gut geeignet.

Die Dotierkonzentration des Seltenerdmaterials liegt vorzugsweise im Bereich zwischen 0,005% und 7%, insbesondere im Bereich zwischen 0,1% und 4%.

Aber nicht nur das Dotierungsmittel, sondern auch die Pyrochlorphase selbst kann ein Seltenerdmaterial oder mehrere Seltenerdmaterialien umfassen, etwa Gd und/oder Dy und/oder Tm und/oder Tb, etc. Das thermographische Material kann dann insbesondere die Form (A,B)ᵥ(CₓD_{y})O_{z} mit x+y ≈ 2 und z ≈ 7, insbesondere mit v ≈ 2, x+y ≈ 2 und z ≈ 7, weiter insbesondere mit v = 2, x+y = 2 und z = 7, aufweisen, wobei A für wenigstens ein Seltenerdmaterial der Pyrochlorphase, B für wenigstens ein Seltenerdmaterial als Dotierungsmittel, C für Zr und D für Hf stehen.

In einer speziellen Weiterbildung der Erfindung umfasst die Pyrochlorphase (Gd,B)₂Hf₂O₇, also Gadoliniumhafnat (Gd₂Hf₂O₇), welches mit wenigstens einem Seltenerdmaterial B dotiert ist.

Alternativ dazu kann die Pyrochlorphase (Gd,B)₂Zr₂O₇ umfassen, also Gadoliniumzirkonat (Gd₂Zr₂O₇), welches mit wenigstens einem Seltenerdmaterial B dotiert ist. Es sind aber auch Mischungen aus dotiertem Gadoliniumhafnat und dotiertem Gadoliniumzirkonat möglich.

Die beiden genannten speziellen dotierten Pyrochlorphasen eignen sich aufgrund ihrer guten Wärmedämmeigenschaften in besonderem Maße zum Aufbau von Wärmedämmschichten.

In einer Weiterbildung der Erfindung weist das Schichtsystem eine metallische Anbindungsschicht auf, die zwischen dem Substrat und der ersten Schicht angeordnet ist. Die metallische Anbindungsschicht besteht vorteilhaft aus einer MCrAlX-Legierung, wobei M für ein Metall, insbesondere für Eisen (Fe), Nickel (Ni) oder Kobalt (Co) und X für zumindest ein Element der seltenen Erden, Yttrium (Y) oder Silizium (Si) steht. Die MCrAlX-Legierung besteht vorteilhaft aus 24 - 26 Gew.-% Kobalt, 16 bis 18 Gew.-% Chrom, 9,5 bis 11 Gew.-% Aluminium, 0,3 bis 0,5 Gew.-% Yttrium, 0,5 bis 2,0 Gew.-% Rhenium und Rest Nickel. Alternativ besteht die MCrAlX-Legierung aus 11 - 13 Gew.-% Kobalt, 20 bis 22 Gew.-% Chrom, 10,5 bis 11,5 Gew.-% Aluminium, 0,3 bis 0,5 Gew.-% Yttrium, 1,5 bis 2,5 Gew.-% Rhenium und Rest Nickel.

Statt auf Nickel kann die MCrAlX-Legierung auch auf Kobalt basieren. Eine auf Kobalt basierende MCrAlX-Legierung kann aus 29 bis 31 Gew.-% Nickel, 27 bis 29 Gew.-% Chrom, 7 bis 9 Gew.-% Aluminium, 0,5 bis 0,7 Gew.-% Yttrium, 0,6 bis 0,8 Gew.-% Silizium, Rest Kobalt bestehen. In einer alternativen Variante besteht die MCrAlX-Legierung aus 27 bis 29 Gew.-% Nickel, 23 bis 25 Gew.-% Chrom, 9 bis 11 Gew.-% Aluminium, 0,5 bis 0,7 Gew.-% Yttrium, Rest Kobalt.

Die erste Schicht wird vorteilhaft als Wärmedämmschicht insbesondere für heißgasbeanspruchte Turbinenbauteile als Substrat verwendet. Das Schichtsystem kann zudem eine undotierte Wärmedämmschicht, bspw. eine stabilisierte Zirkonoxidschicht, insbesondere eine mit Yttrium stabilisierte Zirkonoxidschicht, oder eine undotierte Pyrochlorphase als eine weitere Wärmedämmschicht aufweisen, die zwischen dem Substrat und der ersten Schicht bzw. zwischen der metallischen Anbindungsschicht und der ersten Schicht angeordnet ist.

Erfindungsgemäß wird also insbesondere eine mit wenigstens einem Seltenerdmaterial dotierte Pyrochlorphase als Wärmedämmschicht mit thermographischen Eigenschaften verwendet.

Das Dotierungsmittel kann ausgewählt sein aus der Gruppe: Eu, Tb, Er, Dy, Sm, Ho, Pr, Yb, Nd und Tm, wobei sich insbesondere Dy und Tm aufgrund des vorteilhaften temperaturabhängigen Abklingverhaltens ihrer Lumineszenzstrahlung als Dotierungsmittel gut eignen. Die Dotierkonzentration des Seltenerdmaterials liegt vorzugsweise im Bereich zwischen 0,005% und 7%, insbesondere im Bereich zwischen 0,1% und 4%.

Die Pyrochlorphase und das Seltenerdmaterial weisen insbesondere diejenigen Merkmale, Eigenschaften und Vorteile auf, die bezüglich der im Rahmen des Schichtsystems beschriebenen Pyrochlorphase und des im Rahmen des Schichtsystems beschriebenen Seltenerdmaterials näher erläutert worden sind. So kann die Pyrochlorphase bspw. die Form (A,B)ᵥ(CₓD_{y})O_{z} mit x+y ≈ 2 und z ≈ 7, insbesondere mit v ≈ 2, x+y ≈ 2 und z ≈ 7, weiter insbesondere mit v = 2, x+y = 2 und z = 7, aufweisen, wobei A für wenigstens ein Seltenerdmaterial der Pyrochlorphase, B für wenigstens ein Seltenerdmaterial als Dotierungsmittel, C für Zr und D für Hf stehen. Insbesondere kann die Pyrochlorphase (Gd,B)₂Hf₂O₇ und/oder (Gd,B)₂Zr₂O₇ umfassen oder daraus bestehen, wobei B für wenigstens ein Seltenerdmaterial als Dotierungsmittel steht.

Die erste Schicht wird insbesondere als Wärmedämmschicht für ein im Heißgaspfad einer Turbine befindliches Turbinenbauteil, insbesondere für ein Gasturbinenbauteil, eingesetzt, bspw. als Wärmedämmschicht für eine Turbinenschaufel oder ein Hitzeschildelement einer Gasturbinenbrennkammer.

Weitere Merkmale, Eigenschaften und Vorteile der Erfindung ergeben sich aus der nachfolgenden Beschreibung von Ausführungsbeispielen unter Bezugnahme auf die beiliegenden Figuren.

Es zeigen
- Figur 1: ein erstes Ausführungsbeispiel für ein erfindungsgemäßes Schichtsystem,
- Figur 2: ein zweites Ausführungsbeispiel für ein erfindungsgemäßes Schichtsystem,
- Figur 3: ein drittes Ausführungsbeispiel für ein erfindungsgemäßes Schichtsystem,
- Figur 4: eine Gasturbine,
- Figur 5: eine perspektivische Ansicht einer Turbinenschaufel,
- Figur 6: eine perspektivische Ansicht einer Brennkammer.

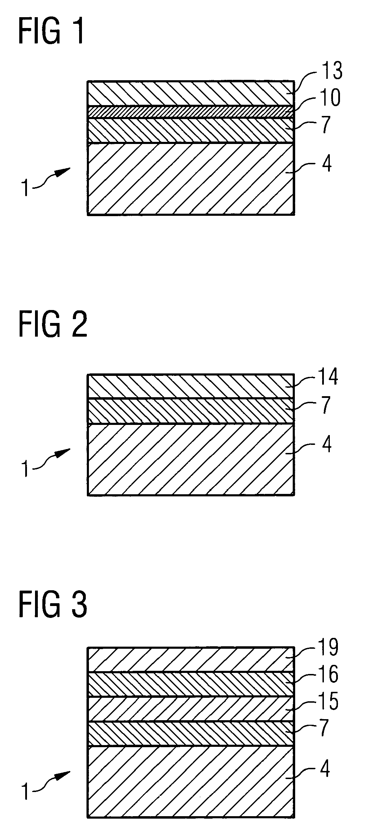

Die Figur 1 zeigt ein erstes Ausführungsbeispiel für ein erfindungsgemäßes Schichtsystem.

Das Schichtsystem 1 weist ein metallisches Substrat 4 auf, das insbesondere für Bauteile, die bei hohen Temperaturen zum Einsatz kommen sollen, aus einer nickel- oder kobaltbasierten Superlegierung besteht. Beispiele für derartige Bauteile sind Turbinenbauteile wie etwa Lauf- oder Leitschaufeln von Gasturbinen.

Direkt auf dem Substrat 4 ist vorzugsweise eine metallische Anbindungsschicht 7 insbesondere des Typs MCrAlX vorhanden. Diese kann auf Nickel basieren und aus 11 - 13 Gew.-% Kobalt, 20 bis 22 Gew.-% Chrom, 10,5 bis 11,5 Gew.-% Aluminium, 0,3 bis 0,5 Gew.-% Yttrium, 1,5 bis 2,5 Gew.-% Rhenium, Rest Nickel und insbesondere aus 12 Gew.-% Kobalt, 21 Gew.-% Chrom, 11 Gew.-% Aluminium, 0,4 Gew.-% Yttrium, 2 Gew.-% Rhenium, Rest Nickel. Sie kann aber auch aus 24 - 26 Gew.-% Kobalt, 16 bis 18 Gew.-% Chrom, 9,5 bis 11 Gew.-% Aluminium, 0,3 bis 0,5 Gew.-% Yttrium, 0,5 bis 2,0 Gew.-% Rhenium, Rest Nickel und insbesondere aus 25 Gew.-% Kobalt, 17 Gew.-% Chrom, 10,5 Gew.-% Aluminium, 0,6 Gew.-% Yttrium, 1 Gew.-% Rhenium, Rest Nickel bestehen.

Statt auf Nickel kann die MCrAlX-Legierung auch auf Kobalt basieren. Eine auf Kobalt basierende MCrAlX-Legierung kann aus 29 bis 31 Gew.-% Nickel, 27 bis 29 Gew.-% Chrom, 7 bis 9 Gew.-% Aluminium, 0,5 bis 0,7 Gew.-% Yttrium, 0,6 bis 0,8 Gew.-% Silizium, Rest Kobalt bestehen und insbesondere aus 30 Gew.-% Nickel, 28 Gew.-% Chrom, 8 Gew.-% Aluminium, 0,6 Gew.-% Yttrium, 0,7 Gew.-% Silizium, Rest Kobalt. In einer alternativen Variante besteht die MCrAlX-Legierung aus 27 bis 29 Gew.-% Nickel, 23 bis 25 Gew.-% Chrom, 9 bis 11 Gew.-% Aluminium, 0,5 bis 0,7 Gew.-% Yttrium, Rest Kobalt und insbesondere aus 28 Gew.-% Nickel, 24 Gew.-% Chrom, 10 Gew.-% Aluminium, 0,6 Gew.-% Yttrium, Rest Kobalt. Alternativ kann jedoch auch nur eine Aluminiumoxidschicht als Anbindungsschicht vorhanden sein.

Auf der MCrA1X 7 ist bereits vor dem Aufbringen weiterer keramischer Schichten eine Aluminiumoxidschicht entstanden oder während des Betriebs entsteht eine solche Aluminiumoxidschicht (TGO) .

Auf der metallischen Anbindungsschicht 7 oder der Aluminiumoxidschicht (nicht dargestellt) ist im vorliegenden Ausführungsbeispiel eine innere Schicht 10, vorzugsweise eine vollständig oder teilweise stabilisierte Zirkonoxidschicht oder eine undotierte Pyrochlorschicht auf Gd₂Hf₂O₇- oder Gd₂Zr₂O₇-Basis vorhanden. Vorzugsweise wird Yttrium-stabilisiertes Zirkonoxid verwendet, wobei vorzugsweise 6 Gew.-% bis 8 Gew.-% Yttrium verwendet wird. Ebenso kann Kalziumoxid, Ceroxid und/oder Hafniumoxid zur Stabilisierung von Zirkonoxid verwendet werden. Statt

Das Zirkonoxid wird beispielsweise als plasmagespritzte Schicht aufgetragen, kann vorzugsweise auch als kolumnare Struktur mittels Elektronenstrahlverdampfen (EBPVD) aufgebracht werden.

Auf der stabilisierten Zirkonoxidschicht 10 ist eine äußere keramische Schicht 13 als erste Schicht aufgebracht, die ein thermographisches Material aufweist. Das thermographische Material ist eine Pyrochlorphase, die Dy oder Tm als Dotierung enthält. Die Dotierkonzentration des Dy oder Tm liegt im Bereich zwischen 0,1% und 4% liegt.

Das Dy oder Tm dient als Aktivator, der eine Lumineszenz der dotierten Pyrochlorphase bei Anregung mit UV-Strahlung herbeiführt. Das Abklingverhalten der Lumineszenzstrahlung - insbesondere ihre charakteristische Abklingzeit - hängt von der Temperatur der Pyrochlorphase ab und ermöglicht so eine Temperaturmessung durch Anregen von Lumineszenzstrahlung der dotierten Pyrochlorphase und Bestimmen des Abklingverhaltens der Lumineszenz, insbesondere der charakteristischen Abklingzeit.

Die Pyrochlorphase besteht im Ausführungsbeispiel aus Gadoliniumhafnat (Gd₂Hf₂O₇) oder Gadoliniumzirkonat (Gd₂Zr₂O₇), welches mit Dy oder Tm dotiert ist. Sie kann aber auch aus dotiertem Gdᵥ(ZrₓHf_{y})O_{z} mit v = 2, x + y = 2 und z = 7 bestehen. Statt Gd oder zusätzlich zu Gd können grundsätzlich auch andere Seltenerdmaterialien in der Pyrochlorphase Verwendung finden.

Das Seltenerdmaterial zum Dotieren kann insbesondere ausgewählt sein aus der Gruppe: Eu, Tb, Er, Dy, Sm, Ho, Pr, Yb, Nd und Tm. Es kann als Oxid mit dem Wirtsgitter (im vorliegenden Ausführungsbeispiel Gd₂Hf₂O₇ oder Gd₂Zr₂O₇) zur Reaktion gebracht werden, um den thermographischen Leuchtstoff zu bilden. Die Dotierkonzentration kann hierbei im Bereich zwischen 0,005% und 7%, insbesondere im Bereich zwischen 0,1% und 4% liegen. Durch die Wahl des Seltenerdmaterials zum Dotieren lässt sich das Abklingverhalten der Lumineszenzstrahlung des thermographischen Leuchtstoffes, insbesondere seine charakteristische Abklingzeit, geeignet festlegen. Die Intensität der Lumineszenzstrahlung eines bestimmten Dotiermaterials lässt sich bspw. durch die Dotierkonzentration beeinflussen.

Die Schichtdicke der inneren Schicht 10 beträgt vorzugsweise weniger als 50% der Gesamtschichtdicke von innerer Schicht 10 und äußerer keramischer Schicht 13.

Die innere keramische Schicht 10 hat vorzugsweise eine Dicke von 25µm bis 100µm, insbesondere 50µm ± 5µm. Die Gesamtschichtdicke der inneren Schicht 10 und der äußeren Schicht 13 beträgt 300µm oder mehr, vorzugsweise 400 µm. Die maximale Gesamtschichtdicke beträgt vorteilhafterweise 800 µm oder vorzugsweise maximal 600 µm.

Die Schichtdicke der inneren Schicht 10 zwischen 10% und 40%, vorzugsweise zwischen 10% und 30% der Gesamtschichtdicke. Ebenso vorteilhaft ist es, wenn die Schichtdicke der inneren Schicht 10 10% bis 20% der Gesamtschichtdicke aufweist. Alternativ kann die Schichtdicke der inneren Schicht 10 zwischen 20% und 50% oder zwischen 20% und 40% der Gesamtschichtdicke betragen. Wenn der Anteil der inneren Schicht 10 an der Gesamtschichtdicke zwischen 20% und 30% liegt, werden ebenso vorteilhafte Ergebnisse erzielt.
Die Schichtdicke der inneren Schicht 10 kann aber auch 30% bis 50% der Gesamtschichtdicke, insbesondere zwischen 40% bis 50% der Gesamtschichtdicke betragen.

Obwohl die äußere keramische Schicht 13 bessere Wärmedämmeigenschaften aufweist als die ZrO₂-Schicht, kann die ZrO₂-Schicht genauso dick ausgeführt werden wie die keramische Schicht 13.

Die Figur 2 zeigt ein zweites Ausführungsbeispiel für ein erfindungsgemäßes Schichtsystem.

Elemente des zweiten Ausführungsbeispiels, die einem Element aus dem ersten Ausführungsbeispiel entsprechen, sind mit den gleichen Bezugszeichen wie im ersten Ausführungsbeispiel bezeichnet und werden nicht noch einmal eingehend erläutert.

Das Schichtsystem 1 weist ein metallisches Substrat 4 auf, das insbesondere für Bauteile, die bei hohen Temperaturen zum Einsatz kommen sollen, aus einer nickel- oder kobaltbasierten Superlegierung besteht. Beispiele für derartige Bauteile sind Turbinenbauteile wie etwa Lauf- oder Leitschaufeln von Gasturbinen.

Direkt auf dem Substrat 4 ist vorzugsweise eine metallische Anbindungsschicht 7 insbesondere des Typs MCrAlX vorhanden. Alternativ kann jedoch auch eine Aluminiumoxidschicht als Anbindungsschicht vorhanden sein. Bezüglich der Zusammensetzung der MCrAlX-Anbindungsschicht gilt das zur Anbindungsschicht des ersten Ausführungsbeispiels Ausgeführte analog.

Direkt auf der metallischen Anbindungsschicht 7 ist eine keramische Wärmedämmschicht 14 als erste Schicht aufgebracht. Die Wärmedämmschicht besteht vorzugsweise aus dotiertem Gadoliniumhafnat oder dotiertem Gadoliniumzirkonat als Pyrochlorphase mit Thulium (Tm) oder Dysprosium (Dy) als Dotiermaterial. Sie kann jedoch auch aus anderen Pyrochlorphasen oder aus Mischungen von zwei oder mehr Pyrochlorphasen bestehen. Ebenso können statt oder zusätzlich zu Thulium oder Dysprosium auch andere Dotierstoffe Verwendung finden, bspw. andere Seltenerdmaterialien. Die Dotierkonzentration kann hierbei insbesondere im Bereich zwischen 0,005% und 7% liegen. Insbesondere kann die als äußere Schicht dienende keramische Wärmedämmschicht so ausgebildet sein wie die äußere Schicht 13 des ersten Ausführungsbeispiels. Dies gilt auch für die die mit Bezug auf diese äußere Schicht 13 genannten Dotiermaterialien.

Die Figur 3 zeigt ein weiteres Ausführungsbeispiel für ein erfindungsgemäßes Schichtsystem 1.

Das Schichtsystem 1 besteht wiederum aus einem Substrat 4, auf dem eine metallische Anbindungsschicht 7 vorhanden ist.

Auf dieser metallischen Anbindungsschicht, auf der sich eine Aluminiumoxidschicht (TGO) bildet (nicht dargestellt), ist eine innere keramische Anbindungsschicht 15, insbesondere teil- oder vollstabilisiertes Zirkonoxid vorhanden, auf der dann eine innere Wärmedämmschicht 16 aus einer Pyrochlorphase vorhanden ist.

Auf inneren Wärmedämmschicht 16 ist eine äußere Wärmedämmschicht 19 vorhanden. Die äußerste Schicht 19 ist ebenfalls aus einer Pyrochlorphase hergestellt, insbesondere aus derselben Pyrochlorphase wie die innenliegende Schicht 16, jedoch weist die äußere Wärmedämmschicht 19 eine Dotierung mit einem Leuchtstoff, wie er schon mit Bezug auf die Figuren 1 und 2 beschrieben worden ist, auf. Die Dotierkonzentration kann hierbei insbesondere im Bereich zwischen 0,005% und 7% und vorzugsweise im Bereich zwischen 0,1% und 4% liegen. Als Pyrochlorphase kommt grundsätzlich jede der bisher beschriebenen Pyrochlorphasen in Betracht.

Die Dicke der dotierten Pyrochlorschicht 19 beträgt vorzugsweise 2 µm bis 50 µm, insbesondere 5 µm - 30 µm.

In den Ausführungsbeispielen kann zudem über der jeweiligen dotierten Pyrochlorschicht grundsätzlich auch noch eine weitere Wärmedämmschicht vorhanden sein, bspw. eine mit Yttrium stabilisierte oder teilstabilisierte Zirkonoxidschicht oder eine undotierte Pyrochlorschicht.

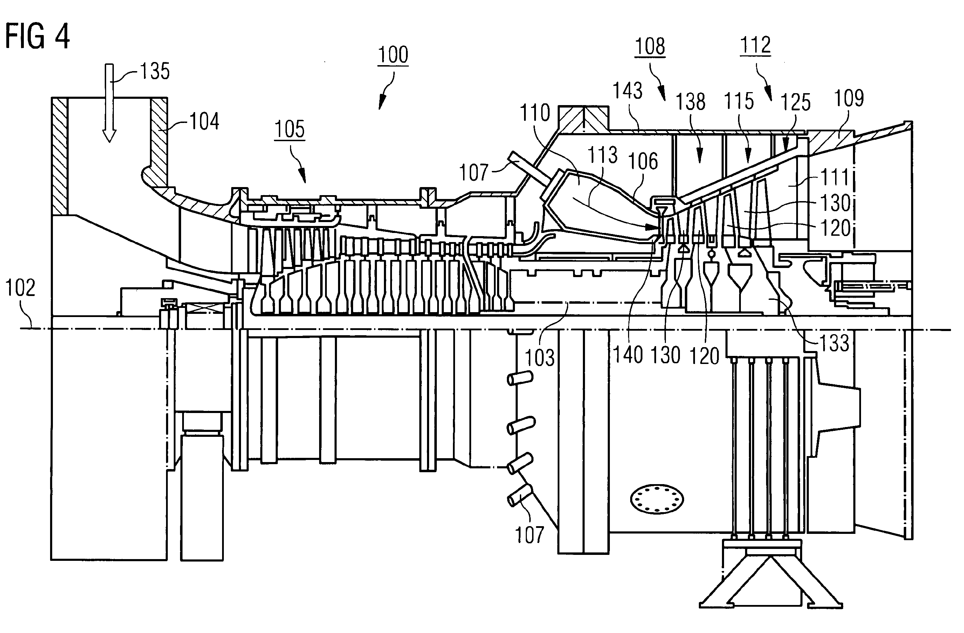

Die Figur 4 zeigt beispielhaft eine Gasturbine 100 in einem Längsteilschnitt. Die Gasturbine 100 weist im Inneren einen um eine Rotationsachse 102 drehgelagerten Rotor 103 mit einer Welle 101 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109. Die Ringbrennkammer 110 kommuniziert mit einem beispielsweise ringförmigen Heißgaskanal 111. Dort bilden beispielsweise vier hintereinander geschaltete Turbinenstufen 112 die Turbine 108. Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet. Um den dort herrschenden Temperaturen standzuhalten, können diese mittels eines Kühlmittels gekühlt werden. Ebenso können Substrate der Bauteile eine gerichtete Struktur aufweisen, d.h. sie sind einkristallin (SX-Struktur) oder weisen nur längsgerichtete Körner auf (DS-Struktur). Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

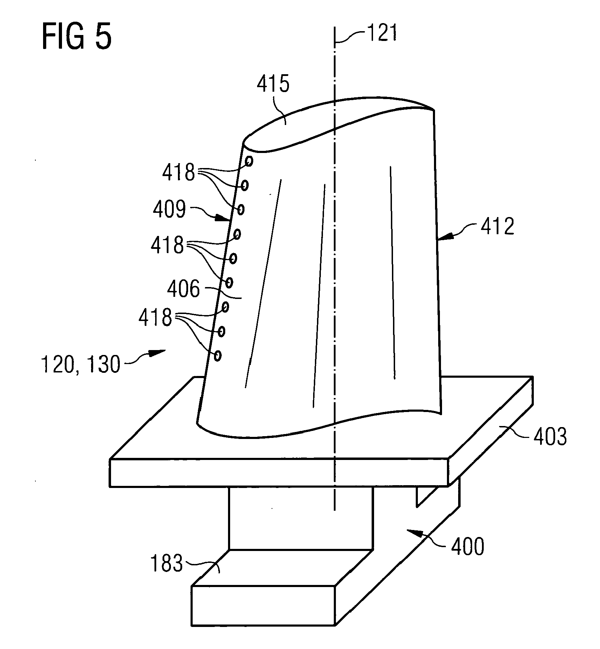

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt). Der Schaufelfuß 183 ist beispielsweise als Hammerkopf ausgestaltet. Andere Ausgestaltungen als Tannenbaum- oder Schwalbenschwanzfuß sind möglich. Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen. Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen. Die Dichte liegt vorzugsweise bei 95% der theoretischen Dichte. Auf der MCrAlX-Schicht, d.h. der Anbindungsschicht 7, ist noch die keramische Wärmedämmschicht 13 vorhanden. Weiterhin kann zwischen der MCrAlX-Schicht und der keramischen Schicht 13 noch die innere keramische Schicht 10 vorhanden sein. Die Wärmedämmschicht bedeckt die gesamte MCrAlX-Schicht.
Durch geeignete Beschichtungsverfahren wie z.B. Elektronenstrahlverdampfen (EB-PVD) werden stängelförmige Körner in der Wärmedämmschicht erzeugt. Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

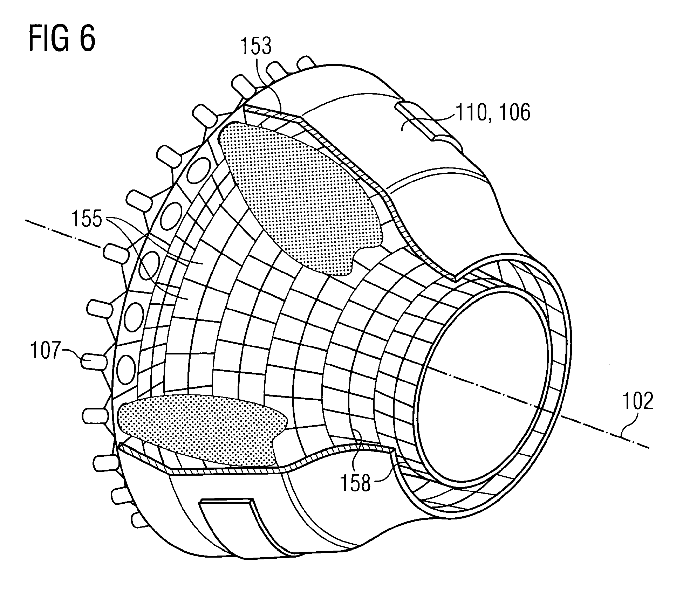

Die Figur 6 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrA1X-Schicht und keramische Beschichtung 13 und ggf. keramische Schicht 10) ausgestattet. Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX ist noch die erfindungsgemäße keramische Wärmedämmschicht 13 vorhanden. Durch geeignete Beschichtungsverfahren wie z.B. Elektronenstrahlverdampfen (EB-PVD) werden stängelförmige Körner in der Wärmedämmschicht erzeugt. Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Schichtsystem (1),
aufweisend
ein Substrat (4),
auf dem eine erste Schicht (13, 14, 19) vorhanden ist,
die ein thermographisches Material aufweist,
wobei das thermographische Material eine mit wenigstens einem Seltenerdmaterial dotierte Pyrochlorphase ist.

2. Schichtsystem (1) nach Anspruch 1,
bei dem das Seltenerdmaterial ausgewählt ist aus der Gruppe, bestehend aus Eu, Tb, Er, Dy, Sm, Ho, Pr, Yb, Nd und Tm.

3. Schichtsystem (1) nach Anspruch 2,
bei dem das Seltenerdmaterial Dy oder Tm oder ein Gemisch daraus ist.

4. Schichtsystem (1) nach einem der Ansprüche 1 bis 3,
bei dem die Dotierkonzentration des Seltenerdmaterials im Bereich zwischen 0,005% und 7% liegt.

5. Schichtsystem (1) nach Anspruch 4,
bei dem die Dotierkonzentration des Seltenerdmaterials im Bereich zwischen 0,1% und 4% liegt.

6. Schichtsystem (1) nach einem der Ansprüche 1 bis 5,
bei dem das thermographische Material die Form (A,B)ᵥ(CₓD_{y})O_{z} mit x+y ≈ 2 und z ≈ 7 aufweist,
wobei A für wenigstens ein Seltenerdmaterial der Pyrochlorphase, B für wenigstens ein Seltenerdmaterial als Dotierungsmittel, C für Zr und D für Hf stehen.

7. Schichtsystem (1) nach Anspruch 6,
bei dem das thermographische Material die Form (A,B)ᵥ(CₓD_{y})O_{z} mit v ≈ 2, x+y ≈ 2 und z ≈ 7 aufweist,
wobei A für wenigstens ein Seltenerdmaterial der Pyrochlorphase, B für wenigstens ein Seltenerdmaterial als Dotierungsmittel, C für Zr und D für Hf stehen.

8. Schichtsystem (1) nach Anspruch 7,
bei dem das thermographische Material die Form (A,B)₂(CₓD_{y})O₇ mit x+y = 2 aufweist, wobei A für wenigstens ein Seltenerdmaterial der Pyrochlorphase, B für wenigstens ein Seltenerdmaterial als Dotierungsmittel, C für Zr und D für Hf stehen.

9. Schichtsystem (1) nach Anspruch 7,
bei dem die Pyrochlorphase (Gd,B)₂Hf₂O₇ umfasst oder daraus besteht,
wobei B für wenigstens ein Seltenerdmaterial als Dotierungsmittel steht.

10. Schichtsystem (1) nach Anspruch 8 oder Anspruch 9,
bei dem die Pyrochlorphase (Gd,B)₂Zr₂O₇ umfasst oder daraus besteht, wobei B für wenigstens ein Seltenerdmaterial als Dotierungsmittel steht.

11. Schichtsystem (1) nach einem der Ansprüche 1 bis 10,
das eine metallische Anbindungsschicht (7) aufweist,
die zwischen dem Substrat (4) und der ersten Schicht (13, 14, 19) angeordnet ist.

12. Schichtsystem (1) nach Anspruch 11,
bei dem die metallische Anbindungsschicht (7) aus einer MCrAlX-Legierung besteht.

13. Schichtsystem (1) nach Anspruch 12,
bei dem die MCrAlX-Legierung aus 24 - 26 Gew.-% Kobalt, 16 bis 18 Gew.-% Chrom, 9,5 bis 11 Gew.-% Aluminium, 0,3 bis 0,5 Gew.-% Yttrium, 0,5 bis 2,0 Gew.-% Rhenium und Rest Nickel besteht.

14. Schichtsystem (1) nach Anspruch 12,
bei dem die MCrAlX-Legierung aus 11 - 13 Gew.-% Kobalt, 20 bis 22 Gew.-% Chrom, 10,5 bis 11,5 Gew.-% Aluminium, 0,3 bis 0,5 Gew.-% Yttrium, 1,5 bis 2,5 Gew.-% Rhenium und Rest Nickel besteht.

15. Schichtsystem (1) nach Anspruch 12,
bei dem die MCrAlX-Legierung aus 29 bis 31 Gew.-% Nickel, 27 bis 29 Gew.-% Chrom, 7 bis 9 Gew.-% Aluminium, 0,5 bis 0,7 Gew.-% Yttrium, 0,6 bis 0,8 Gew.-% Silizium und Rest Kobalt besteht.

16. Schichtsystem (1) nach Anspruch 12,
bei dem die MCrAlX-Legierung aus 27 bis 29 Gew.-% Nickel, 23 bis 25 Gew.-% Chrom, 9 bis 11 Gew.-% Aluminium, 0,5 bis 0,7 Gew.-%Yttrium und Rest Kobalt besteht.

17. Schichtsystem (1) nach einem der Ansprüche 1 bis 16,
das eine Wärmedämmschicht aufweist, die zwischen dem Substrat (4) und der ersten Schicht (13, 14, 19) bzw. zwischen der metallischen Anbindungsschicht (7) und der ersten Schicht (13) angeordnet ist.

18. Schichtsystem (1) nach Anspruch 17,
in dem die Wärmedämmschicht eine stabilisierte Zirkonoxidschicht (10),
insbesondere eine Yttrium-stabilisierte Zirkonoxidschicht, oder eine undotierte Pyrochlorschicht ist.

19. Verwendung einer mit wenigstens einem Seltenerdmaterial dotierten Pyrochlorphase als Wärmedämmschicht mit thermographischen Eigenschaften.

20. Verwendung nach Anspruch 19,
wobei das Dotierungsmittel ausgewählt ist aus der Gruppe, bestehend aus Eu, Tb, Er, Dy, Sm, Ho,
Pr, Yb, Nd und Tm.

21. Verwendung nach Anspruch 20,
bei dem die Dotierkonzentration des Seltenerdmaterials im Bereich zwischen 0,005% und 7% liegt.

22. Verwendung nach Anspruch 21,
bei dem die Dotierkonzentration des Seltenerdmaterials im Bereich zwischen 0,1% und 4% liegt.

23. Verwendung nach einem der Ansprüche 19 bis 22,
wobei die dotierte Pyrochlorphase die Form (A,B)ᵥ(CₓD_{y})O_{z} mit x+y ≈ 2 und z ≈ 7 aufweist,
wobei A für wenigstens ein Seltenerdmaterial der Pyrochlorphase, B für wenigstens ein Seltenerdmaterial als Dotierungsmittel, C für Zr und D für Hf stehen.

24. Verwendung nach Anspruch 23,
die dotierte Pyrochlorphase die Form (A,B)ᵥ(CₓD_{y})O_{z} mit
v ≈ 2, x+y ≈ 2 und z ≈ 7 aufweist,
wobei A für wenigstens ein Seltenerdmaterial der Pyrochlorphase, B für wenigstens ein Seltenerdmaterial als Dotierungsmittel, C für Zr und D für Hf stehen.

25. Schichtsystem (1) nach Anspruch 24,
bei dem die dotierte Pyrochlorphase die Form (A,B)₂(CₓD_{y})O₇ mit x+y = 2 aufweist,
wobei A für ein Seltenerdmaterial der Pyrochlorphase, B für wenigstens ein Seltenerdmaterial als Dotierungsmittel, C für Zr und D für Hf stehen.

26. Verwendung nach Anspruch 25,
bei dem die Pyrochlorphase (Gd,B)₂Hf₂O₇ umfasst oder daraus besteht,
wobei B für wenigstens ein Seltenerdmaterial als Dotierungsmittel steht.

27. Verwendung nach Anspruch 25 oder 26,
bei dem die Pyrochlorphase (Gd,B)₂Zr₂O₇ umfasst oder daraus besteht,
wobei B für wenigstens ein Seltenerdmaterial als Dotierungsmittel steht.
